# EUROPEAN PATENT APPLICATION

(11) **EP 4 745 741 A1**
(43) Date of publication of application: **20.05.2026**
(21) Application number: 25214281.5
(22) Date of filing: 07.11.2025
(51) Int. Cl.: G06F 3/04842, G06F 3/0482, G06F 3/0489

(54) **DIRECTIONAL NAVIGATION OF ARBITRARY SPACE IN CONTENT CAPTURES USING NON-SPATIAL INPUT DEVICES**

(30) Priority: 13.11.2024 US 202418946206
(71) Applicant: Microsoft Technology Licensing, LLC, Redmond, WA 98052 (US)
(72) Inventor: PADILLA, BRIAN THOMAS, Redmond, 98052 (US); BROWN, ADRIANNA CAROLINE, Redmond, 98052 (US); NESTVOLD, EMMA CATHERINE, Redmond, 98052 (US); CHANG, KARINA JENNIFER, Redmond, 98052 (US); AGRAWAL, MANISH, Redmond, 98052 (US)
(74) Representative: CMS Cameron McKenna Nabarro Olswang LLP

(57) **Abstract**

The techniques presented herein provide a translation system for constructing an accessible environment from a content capture depicting a plurality of user interface elements in a visual desktop environment. As such, the accessible environment enables users who rely on assistive technologies to navigate and interact with personal computing devices. In various examples, assistive technology includes non-spatial input devices (e.g., keyboards, gamepads) that enable users with disabilities to interact with personal computing devices. Generally described, the present system analyzes the content capture using computational models to identify the user interface elements and extract the visual content associated with each user interface element. The visual content is then loaded into a corresponding plurality of data structures that form the accessible environment. As such, a user can provide directional commands to navigate through the accessible environments in a predictable and intuitive manner.

## Description

### BACKGROUND

More of daily life occurs through computing devices, from completing assignments for work and school, to planning vacations and online shopping. As such, a user may utilize a diverse array of software applications to accomplish various tasks. Moreover, a given software application can be transformed by different contexts. For instance, an internet browser can be utilized to look up nearby restaurants at one moment and research information for a presentation at another moment. Consequently, the user may lose track of what they were doing at a given moment as well as the context of that activity. To aid users in retracing their steps, many software applications include features for searching and retrieving content and/or activity, such as the browsing history in an internet browser and/or a listing of recent files in a file explorer.

However, existing features such as keyword-based searches, folder hierarchies, and app-specific organization tools may lack the ability to record context and decipher user intent. For example, a user may attempt a keyword search to recover a source of information for citation in a presentation. Unfortunately, the lack of specificity in existing approaches may prevent the user from finding the information for which they are looking. Moreover, such features place an additional burden on the user to remember exact details about their past activity such as the name of a website, title of an article, or other information. Manual recollection can be especially challenging due to the sheer amount of information the user generates and interacts with. That is, many existing systems place the onus on the user to spend time manually organizing, categorizing, and documenting information rather than accomplishing the tasks they wish to complete.

To that end, recent developments in end user experiences have streamlined activity recall operations by collecting, with the consent of the user, a record of user activity such as a content capture (e.g., a screenshot) of a visual desktop environment. In this way, content captures enable an accurate recollection of moments of interest in past user activity thereby enhancing user engagement and productivity. However, such experiences may fail to include users that rely on assistive technologies such as screen readers and/or non-spatial input devices (e.g., keyboards, gamepads). For instance, a user with blindness or another visual impairment may be unable to view and/or navigate through various content captures.

It is with respect to these and other considerations that the disclosure made herein is presented.

### SUMMARY

The techniques presented herein provide systems for translating a content capture of a desktop environment into an accessible environment to enable directional navigation through arbitrary spaces. As mentioned above, some modern computing devices implement productivity features that enable a user to recall past activity by collecting, with the consent of the user, a record of user activity such as a content capture (e.g., a screenshot) of a visual desktop environment. That is, such a system is configured to capture certain moments of interest that may be useful to the user at a later point in time (e.g., opening a new application, document, or website). In addition, such a system can perform analysis on individual content captures to identify subject matter and extract information to further aid users in recalling past activity such as grouping multiple content captures based on an identified topic. While some of the examples are described herein with respect to the context of user activity recall systems, it should be understood that the disclosed directional navigation system can be utilized in a general use accessibility system in which the accessible environment is generated on-demand (e.g., in a current desktop environment context) rather than at a later point in time (e.g., in a user activity recall context).

Unfortunately, many user activity recall solutions may fail to account for users with disabilities such as people who are blind or live with other visual impairments and who utilize assistive technologies such as non-spatial input devices (e.g., keyboards, gamepads), screen readers, haptic assistance, and the like. As mentioned, activity recall systems typically collect a content capture of a visual desktop environment. Consequently, users who are blind may be unable to view and/or interact with these content captures. In a more general sense, many existing accessibility systems may hamper users with disabilities in fully interacting with their personal computing devices. As such, the present system is directed to constructing an accessible environment that translates the positions and relationships of user interface elements such that a user can navigate and explore content captures using a non-spatial input device.

Generally described, non-spatial input devices differ from spatial input devices such as a mouse, a trackpad, a thumb stick, which involve moving the spatial input device and/or a component of the spatial input device through physical space. As such, users with disabilities such as those with visual impairments, limited dexterity, and the like, may be unable to use spatial input devices and thus rely on non-spatial input devices as well as other assistive technologies (e.g., screen readers, haptic feedback devices) to interact with personal computing devices.

Generally described, the present translation system begins by retrieving a content capture of the visual desktop environment. In various examples, the content capture is retrieved from a separate operating system component that is configured to generate and/or process content captures. Within the context of the present disclosure, a content capture depicts or otherwise includes a plurality of user interface elements. An individual user interface element defines a bounded area within the content capture that contains associated visual content such as image content and/or text content. Moreover, the bounded area of an individual user interface element further defines a vertical position and a horizontal position of the individual user interface element (e.g., (X/Y) coordinates). In a specific example, a bounded area is a 300x600 pixel rectangle with an upper left corner at (X/Y) position (535, 700) within the visual desktop environment.

To translate the content capture into the accessible environment, the translation system applies a first computational model that identifies the bounded area for each individual user interface element in the content capture and a second computational model to extract text content. In a specific example, the first computational model is a screen region detection model that is configured to identify certain regions of the content capture that are most likely to contain relevant information (e.g., an image, a block of text). In another example, the second computational model is an optical character recognition model. In addition, within the context of the present disclosure, text content can be any kind of text data including strings of plain text as well as formattable text objects such as lists, menus, tables, and the like.

Subsequently, for each of the user interface elements identified by the first computational model and then processed by the second computational model, the translation system configures a corresponding navigable element data structure that represents the associated user interface element in the accessible environment. In various examples, an individual navigable element data structure includes the visual content of the associated user interface element (e.g., image and/or text content), the bounded area of the associated user interface element, and a directional cache that can be utilized to record the position of neighboring user interface elements and/or a history of directional movement inputs. Furthermore, the user interface elements can be passed into the navigable element data structures as shared pointers to enable the translation system to directly set a user interface focus on various navigable element data structures.

Accordingly, the plurality of navigable element data structures can be organized into one or more sorted lists by their horizontal positions and/or vertical positions. In a specific example, consider an origin (X/Y) coordinate (0, 0) defined at the top left corner of the visual desktop environment with horizontal (X) coordinates ascending towards the right and vertical (Y) coordinates ascending towards the bottom of the visual desktop environment. As such, the navigable element data structures are organized into two sorted lists by ascending horizontal (X) coordinates and ascending vertical (Y) coordinates, respectively.

The translation system then configures an accessible environment to organize the navigable element data structures and enable a user to navigate through and understand a content capture using a non-spatial input device. In various examples, the navigable element data structures are positioned within the accessible environment in a correspondingly similar manner to the visual desktop environment based on the one or more sorted lists mentioned above.

Accordingly, the translation system can then begin receiving user inputs for navigating through the accessible environment using a non-spatial input device (e.g., a keyboard, a gamepad). In various examples, an additional assistive technology such as a screen reader can identify the user's current position within the accessible environment (e.g., a current user interface focus) via an auditory output of the visual content. In response, the user can provide a directional command via their non-spatial input device defining a movement in a cardinal direction (e.g., up, down, left, and right).

In response, the translation system identifies a subsequent navigable element data structure from a plurality of plausible subsequent navigable element data structures based on the sorted lists of navigable element data structures in relation to the bounded area of a current navigable element data structure. More specifically, the translation system can select equivalent referent edges of the bounded areas relative to the direction of travel defined by the directional command. For instance, a vertical direction of travel (up and down) utilizes the top edges of the bounded area. Similarly, a horizontal direction of travel (left and right) utilizes either the left or right edges of the bounded area based on the alignment of edges as well as the reading order of the user-configured system language.

In various examples, the translation system can process vertical inputs (e.g., up, and down) differently from horizonal inputs (e.g., left, or right). For example, in a horizontal movement, the translation system identifies the subsequent navigable element data structure by selecting the nearest navigable element data structure that shares at least one vertical (Y) coordinate with the current navigable element data structure. Conversely, in a vertical movement, the translation system identifies the subsequent navigable element data structure by selecting the nearest navigable element data structure without requiring a shared horizontal (X) coordinate.

In contrast to many existing accessibility systems, the translation system provides an intuitive user experience by mimicking the experience of reading text while enabling support for situations with irregularly positioned user interface elements. For example, a conventional accessibility system may fail to account for overlapping user interface elements (e.g., a caption in an image) thus preventing a user from understanding the present content and/or "trapping" the user in an unnavigable position within the overlapping user interface elements. In another example, the conventional accessibility system may render an isolated user interface element (e.g., one that does not line up with another user interface element) unreachable. Consequently, the translation system presented herein enhances personal computing devices by enabling users to predictably navigate through user interface elements and ensuring legibility of information.

In various examples, the directional navigation system discussed above can be deployed as a standalone accessibility system. However, these directional navigation techniques can be implemented in addition to other navigation techniques as part of a broader accessibility system. In one example, the directional navigation techniques described herein are utilized in tandem with a linear navigation system that enables a user to cycle through user interface elements using a repeated key press (e.g., tab), often referred to as tab-stops.

As such, the linear navigation system can utilize an algorithm and sorted list (e.g., a linear sorted list) that are different and separate from the sorted lists and navigation algorithm discussed above. For instance, the horizontal and vertical sorted lists organize user interface elements in ascending position order. In contrast, the linear sorted list begins at a point where the user starts navigating, which may or may not be origin (X/Y) coordinate (0,0) and sorts user interface elements according to vertical position only to provide a "row-by-row" style navigation as the user repeats key presses. Moreover, the linear sorted list can be generated prior to the horizontal and vertical sorted lists of the directional navigation system. In this way, an accessibility system that utilizes multiple navigation techniques can ensure that a user can access all of the onscreen user interface elements while enabling the user to select techniques that most suit their preferences and intuitions.

Features and technical benefits other than those explicitly described above will be apparent from a reading of the following Detailed Description and a review of the associated drawings. This Summary is provided to introduce a selection of concepts in a simplified form that are further described below in the Detailed Description. This Summary is not intended to identify key or essential features of the claimed subject matter, nor is it intended to be used as an aid in determining the scope of the claimed subject matter. The term "techniques," for instance, may refer to system(s), method(s), computer-readable instructions, module(s), algorithms, hardware logic, and/or operation(s) as permitted by the context described above and throughout the document.

### BRIEF DESCRIPTION OF THE DRAWINGS

The Detailed Description is described with reference to the accompanying figures. In the figures, the left-most digit(s) of a reference number identifies the figure in which the reference number first appears. The same reference numbers in different figures indicate similar or identical items. References made to individual items of a plurality of items can use a reference number with a letter of a sequence of letters to refer to each individual item. Generic references to the items may use the specific reference number without the sequence of letters.
FIG. 1A is a block diagram of a system for translating a content capture depicting user interface elements in a visual desktop environment into an accessible environment for interactivity with non-spatial input devices.
FIG. 1B illustrates additional aspects of configuring an accessible environment with a plurality of navigable element data structures and sorted lists ordering the navigable element data structures based on horizontal and vertical positions.
FIG. 2 illustrates an accessible environment containing navigable element data structures that include bounded areas and visual content of associated user interface elements and directional caches to record the position of neighboring navigable element data structures.
FIG. 3A illustrates a first scenario in an example accessible environment in which the directional cache addresses potentially ambiguous directionality.
FIG. 3B illustrates a second scenario in an example accessible environment in which the directional cache addresses potentially ambiguous directionality.
FIG. 4 illustrates the use of a directional cache pre-fill to further address potential ambiguity in the event of overlapping user interface elements.
FIG. 5A is a flow diagram showing aspects of a process for translating a content capture depicting user interface elements in a visual desktop environment into an accessible environment for interactivity with non-spatial input devices.
FIG. 5B is a continuation of the flow diagram showing aspects of a process for navigating the translated content capture in the accessible interface.
FIG. 6 is a computer architecture diagram illustrating an illustrative computer hardware and software architecture for a computing system capable of implementing aspects of the techniques and technologies presented herein.

### DETAILED DESCRIPTION

The techniques presented herein provide a translation system for constructing an accessible environment from a content capture depicting a plurality of user interface elements in a visual desktop environment. As such, the accessible environment enables users who rely on assistive technologies to navigate and interact with personal computing devices. In a specific example, the benefits of the present techniques are especially pronounced in user activity recall systems that utilize content captures (e.g., screenshots) to record moments of interest in user activity. In various examples, assistive technology includes non-spatial input devices (e.g., keyboards, gamepads), screen readers, haptic feedback devices, and other such modalities that enable users with disabilities to interact with personal computing devices (e.g., laptops, tablets, desktop computers).

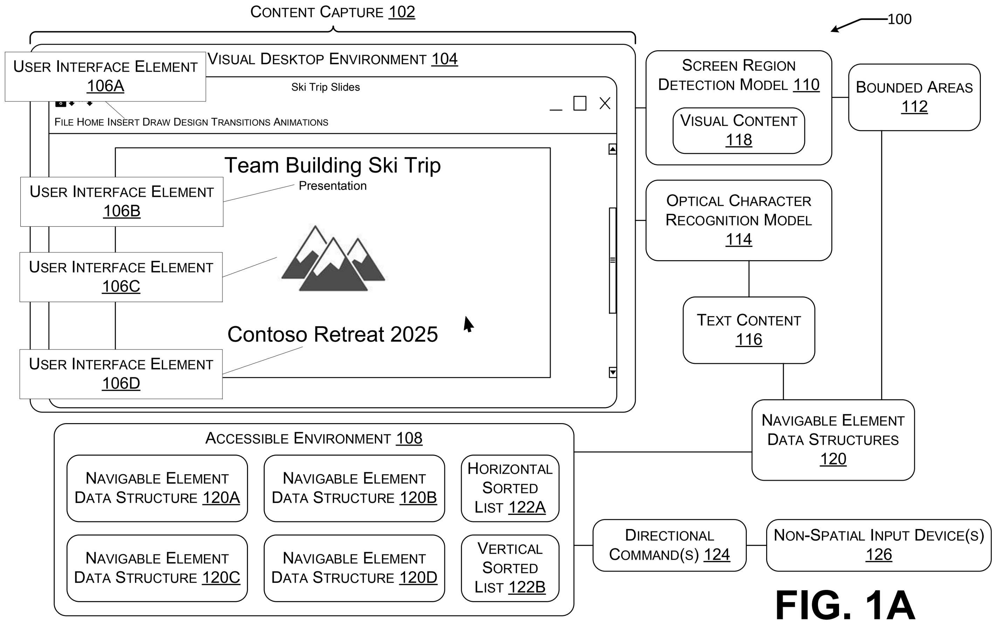

Various examples, scenarios, and aspects related to the techniques are described below with respect to FIGS. 1A-6.

FIG. 1A illustrates a system 100 that translates a content capture 102 depicting a visual desktop environment 104 containing a plurality of user interface elements 106A-106D into an accessible environment 108 that enables users to navigate through the user interface elements 106A-106D and understand the content capture 102 using assistive technologies such as screen readers and non-spatial input devices. In one example, the content capture 102 is retrieved from an operating system component as part of a user activity recall system. That is, a user may utilize the directional navigation techniques discussed herein in a user activity recall system to access and understand their past activity. In another example, the content capture 102 is generated and analyzed on-demand as part of a general-use accessibility system that is used device-wide. Furthermore, the user may also manually invoke the associated automated content analysis to enable directional navigation through their current activity in lieu of the user activity recall system.

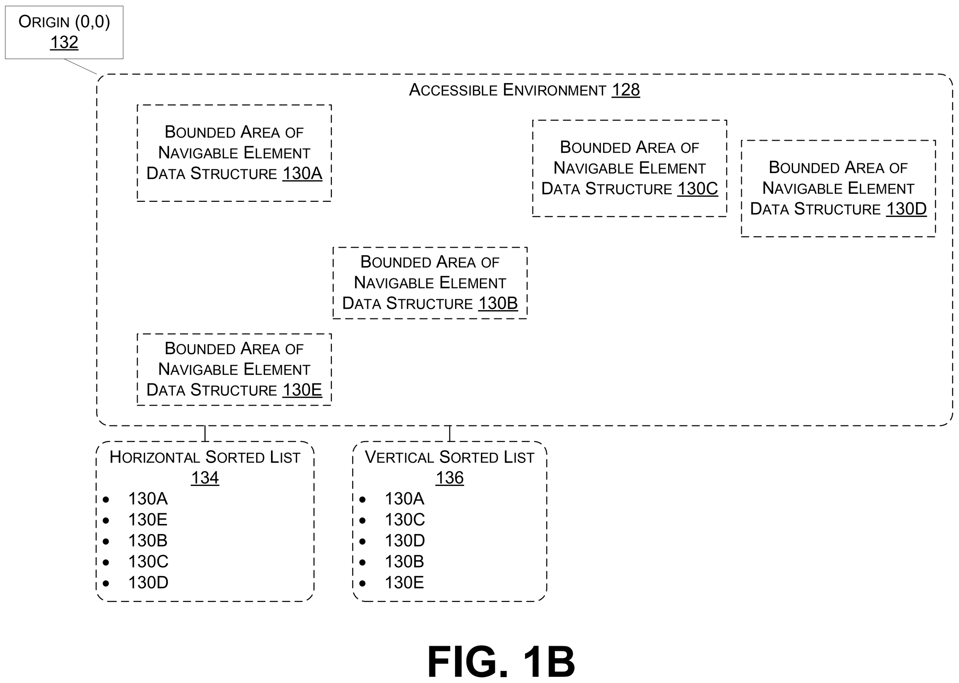

In various examples, an individual user interface element 106A includes a bounded area defining its position within the content capture, and the individual user interface element contains a visual content associated with the user interface element 106A. In a specific example, an individual user interface element 106A is an "insert" menu button in which the bounded area is the clickable area of the "insert" menu button and the associated visual content therein is the "insert" text. In another example, an individual user interface element 106C is an image of mountains in which the bounded area corresponds to the dimensions of the image, and the visual content is the image data depicting the mountains. It should be understood that while the example content capture 102 illustrated in FIG. 1 contains some user interface elements that are not labeled 106A-106D (e.g., the "draw" and "design" menu buttons), this is for the purpose of brevity and legibility and should not be construed as excluding certain user interface elements from translation. Rather, these user interface elements can nonetheless be translated into the accessible environment 108.

Accordingly, the content capture 102 is processed by a first computational model, such as a screen region detection model 110, to identify the bounded area 112 for each of the user interface elements 106A-106D. Moreover, the content capture 102 is processed by a second computational model, such as an optical character recognition model 114, to extract text content 116. As mentioned above, the text content 116 can include any kind of text data including strings of plain text (e.g., "Team Building Ski Trip") as well as formattable text objects such as lists, drop-down menus, tables, image captions, and the like. In addition, the screen region detection model 110 can also be utilized to identify the visual content 118 of each user interface element 106A-106D (e.g., classifying types of images, distinguishing images from text). Furthermore, the screen region detection model 110 can be configured to classify (e.g., group) two or more user interface elements of visual (e.g., text) content into a single user interface element 106B based on locality and/or semantic relationship. For example, the "Team Building Ski Trip" title and "Presentation" subtitle may be grouped together as a single user interface element 106B.

The bounded areas 112 and the visual content 118 (e.g., text content 116, image content) for the plurality of user interface elements 106A-106D are loaded into a corresponding plurality of navigable element data structures 120 that represent the user interface elements 106A-106D within the accessible environment 108. Subsequently, the translation system 100 organizes the navigable element data structures 120 into a horizontal sorted list 122A and a vertical sorted list 122B that order the navigable element data structures 120 according to a respective vertical position and horizontal position of each. As such, the accessible environment 108 can now be configured with the navigable element data structures 120 in which the position of the navigable element data structures 120A-120D correspond to the positions of the bounded areas 112 within the visual desktop environment 104. Moreover, the translation system 100 can directly configure a user interface focus on one of the navigable element data structures, e.g., navigable element data structure 120C. That is, the translation system 100 designates the navigable element data structure 120C as a starting position for user navigation In various examples, the initial user interface focus is set based on a default position (e.g., the center of the visual desktop environment 104) and/or a user configured position.

A user can then input a directional command 124 to the accessible environment 108 via a non-spatial input device (e.g., a gamepad, a keyboard) defining a movement in a cardinal direction (up, down, left, right) from an initial position of the user interface focus. For the sake of discussion, consider an example in which the user interface focus is initially set at the navigable element data structure 120C corresponding to the user interface element 106C (the image of mountains) and the directional command 124 defines a vertical movement downward. In response, the translation system 100 identifies the navigable element data structure 120D corresponding to the user interface element 106D (the "Contoso Retreat 2025" title) as a subsequent navigable element data structure based on the vertical sorted list 122B and the equivalent referent edges of the bounded areas 112 of the element data structures 120C and 120D. In various examples, the navigable element data structure 120D is identified as the subsequent navigable element data structure due to its vertical position being the nearest to the navigable element data structure 120C in the downward direction.

In various examples, the translation system 100 can enforce certain movement rules. For instance, the translation system 100 can require that horizontal moves (e.g., left, and right) between navigable element data structures share at least one vertical (Y) coordinate while not requiring likewise for vertical movements (e.g., sharing a horizontal (X) coordinate). Consider another scenario in which the user interface focus is at the navigable element data structure 120A corresponding to the user interface element 106A (the "Insert" menu button) and in which the directional command 124 defines a horizontal movement to the right. In response, the translation system 100 identifies the navigable element data structure corresponding to the "Draw" menu button user interface element as the subsequent navigable element data structure in accordance with the horizontal sorted list 122A and the equivalent referent edges of the bounded areas 112. This is due to the position of the "Draw" menu button as nearest navigable element data structure that shares at least one vertical coordinate with the current navigable element data structure 120A. As such, the accessible environment 108 solidifies the concept of "lines" when navigating through the accessible environment 108 similar to how one would read lines of text. Consequently, a horizontal movement at the end of a "line" (e.g., at the "Animations" menu button) will advance the user interface focus to the next "line" (e.g., the user interface element 106B). In this way, the translation system ensures predictable and intuitive navigation through the accessible environment 108.

Proceeding to FIG. 1B, additional aspects of configuring an accessible environment with a plurality of navigable element data structures and sorted lists ordering the navigable element data structures based on horizontal and vertical positions are shown and described. As described above in the example of FIG. 1A, a screen region detection model 110 identifies bounded areas 112 for each of the user interface elements 106A-106D depicted in a content capture 102. These bounded areas 112 are then loaded into a corresponding plurality of navigable element data structures 120A-120D and ordered within the sorted lists 122A and 122B based on the horizontal and vertical positions, respectively.

Likewise, the accessible environment 128 in FIG. 1B illustrates a plurality of bounded areas of navigable element data structures 130A-130E that reflect the position of corresponding user interface elements in relation to an origin 132 having (X/Y) coordinates of (0,0). These positions are recorded in a horizontal sorted list 134 and a vertical sorted list 136 that orders the positions of the bounded areas 130A-130E. In a specific example, the position of the bounded areas 130A-130E is defined as the location of the upper left corner of each bounded area 130A-130E in relation to the origin 132. As such, the horizontal sorted list 134 and vertical sorted list 136 are utilized to enable a user to navigate through the accessible environment 128 using a non-spatial input device (e.g., a keyboard, a gamepad) and directional commands as discussed above.

In a specific example of navigating the accessible environment 128, the user begins at the bounded area 130A and inputs a horizontal directional command to the right. In response, the translation system identifies a subsequent bounded area 130C based on the horizontal sorted list 134. To do this, the translation system first identifies plausible targets for the directional command from the horizontal sorted list 134 (e.g., the next entry in the list) and then evaluates whether these plausible targets are in the correct direction in relation to the current bounded area 130A by selecting an equivalent referent edge based on the direction of travel defined by the directional command. In the present example of a horizontal move to the right, the equivalent referent edges are the left edges of the bounded areas 130A-130E.

Accordingly, the translation system determines whether the left edge for each plausible target of the horizontal sorted list 134 shares at least one vertical (Y) coordinate with the left edge of the current bounded area 130A. Stated another way, the height of the plausible target must overlap with the height of the current bounded area 130A. For instance, while the bounded areas 130E and 130B are the next entries in the horizontal sorted list 134, they are not the correct choices for the horizontal move to the right as the left edge of each bounded area 130E and 130B do not share at least one vertical (Y) coordinate with the left edge of the current bounded area 130A. Conversely, the next plausible target in the horizontal sorted list, the bounded area 130C, is the correct choice as its left edge does share at least one vertical (Y) coordinate with the left edge of the current bounded area 130A. In this way, the accessible environment enforces a horizontal movement rule that ensures predictable and intuitive directional navigation.

It should be understood that the left edge is selected as the equivalent referent edge in the present example based on a user-configured system language. As mentioned above and discussed further below, the accessible environment 128 provides an intuitive user experience by mimicking the act of reading text. For instance, an English speaker may find moving left to right more intuitive due to the reading order of English. As such, the left edges of the bounded areas 130A-130E are the default equivalent referent edges analogous to the left alignment of English text. Conversely, an Arabic speaker may find moving right to left more intuitive due to the reading order of Arabic. As such, the right edges of the bounded areas 130A-130E are the default equivalent referent edges analogous to the right alignment of Arabic text. In addition, the opposite edge can be configured as the equivalent referent edge in the event the default equivalent referent edge cannot be assessed (e.g., fully aligned with another edge from another bounded area).

In another example of navigating the accessible environment 128, the user begins at the bounded area 130A and inputs a vertical directional command downward. In response, the translation system identifies a subsequent bounded area 130B based on the vertical sorted list 136. In the present example, the equivalent referent edge for a vertical move is the top edges of the bounded areas 130A-130E. Similar to the example discussed above, the translation system 100 identifies a plausible target for the directional command from the vertical sorted list 136 (e.g., the next entry in the list) then determines whether the plausible target is reasonably in the correct direction of the directional command. This is accomplished by enforcing a vertical movement rule similar to the horizontal movement rule discussed above.

Like the above example, the closest entry in the vertical sorted list 136 may not necessarily be the correct target for the directional command. For instance, while the bounded areas 130C and 130D are the next closest entries in the vertical sorted list 136 after the current bounded area 130A, they are not the correct target for the directional command because they are valid targets for a horizontal directional command. However, the following entry, the bounded area 130B, is the correct target as it is not a valid left or right target. Moreover, unlike the horizontal movement rule above, the vertical movement rule does not require the plausible target to share at least one horizontal (X) coordinate with the current bounded area 130A. In this way, the accessible environment enables the user to reach user interface elements with irregular or unusual alignments such as the element represented by the bounded area 130B as shown in FIG. 1B. In accordance with the same movement rule, the bounded area 130E is the correct target for a subsequent downward directional command from the bounded area 130B thereby preventing the user from being figuratively "trapped" in an isolated bounded area 130B.

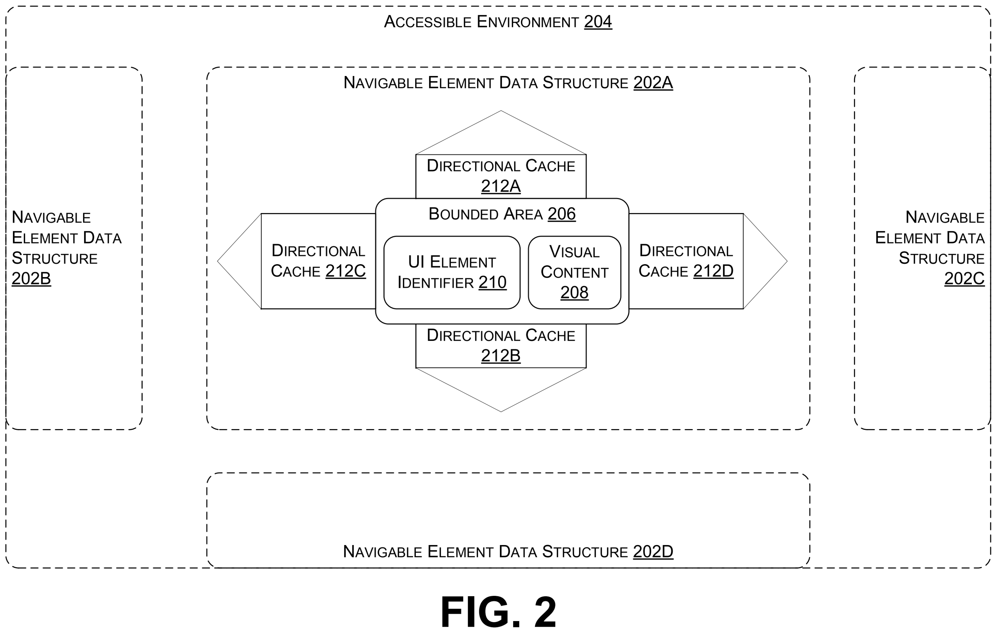

Turning now to FIG. 2, additional technical details regarding an individual navigable element data structure 202A and relationships between current navigable element data structure 202A and neighboring navigable element data structures 202B-202D are shown and described. As mentioned above, an individual navigable element data structure 202A represents a corresponding user interface element (e.g., a block of text, an image) within an accessible environment 204. As such, the navigable element data structure 202A is configured with the components of the associated user interface element including the bounded area 206 and the visual content 208 therein.

Generally described, the bounded area 206 defines a position and dimensions of a user interface element within a visual desktop environment, typically in terms of pixels. In a specific example, the bounded area 206 is defined as a 500x500 pixel area originating at (X/Y) position (650, 200). In addition, the visual content 208 can include text content (e.g., text strings, formattable text objects) and/or image content as illustrated above in FIG. 1. The navigable element data structure 202A may also include a user interface element identifier 210. In various examples, the user interface element identifier 210 enables the navigable element data structure 202A to provide information to other components of the translation system (e.g., sorted lists) as well as external systems (e.g., screen readers). In a specific example, the user interface element identifier is a string of alternative text (alt text) that describes an image which can be input to a screen reader or other user-configured accessibility output modalities.

In addition to the user interface element components themselves, the navigable element data structure 202A further includes a directional cache 212A-212D for each cardinal direction (e.g., up, down, left, and right) that can be utilized to record the neighboring navigable element data structures 202B-202D as a user navigates through the accessible environment. In a specific example, the directional caches 212A-212D are empty when the accessible environment 204 is initially configured. As such, consider a scenario in which a user begins at the navigable element data structure 202B and navigates right, thereby transitioning the user interface focus to the navigable element data structure 202A. In response, the navigable element data structure 202A is configured to identify the navigable element data structure 202B in the left directional cache 212C.

That is, the navigable element data structure 202A can record the fact that the user moved to the navigable element data structure 202A from the navigable element data structure 202B to the left. In this way, the direction cache 212C enables the user to reverse course in a predictable and consistent manner. In contrast to conventional accessibility systems that may not exhibit the same behavior in reverse as movements are calculated on a per-movement basis and positions of other elements are not recorded as they are in the directional caches 212A-212D.

Furthermore, the directional caches 212A-212D can be augmented with pointers to track the sorted positions themselves. That is, rather than rely upon a central sorted list, each of the navigable element data structures 202A-202D can instead be configured with pointers to the other navigable element data structures 202A-202D. In this way, each navigable element data structure 202A-202D can determine a subsequent navigable element data structure in each cardinal direction (e.g., a subsequent vertical navigable element data structure, a subsequent horizontal navigable element data structure).

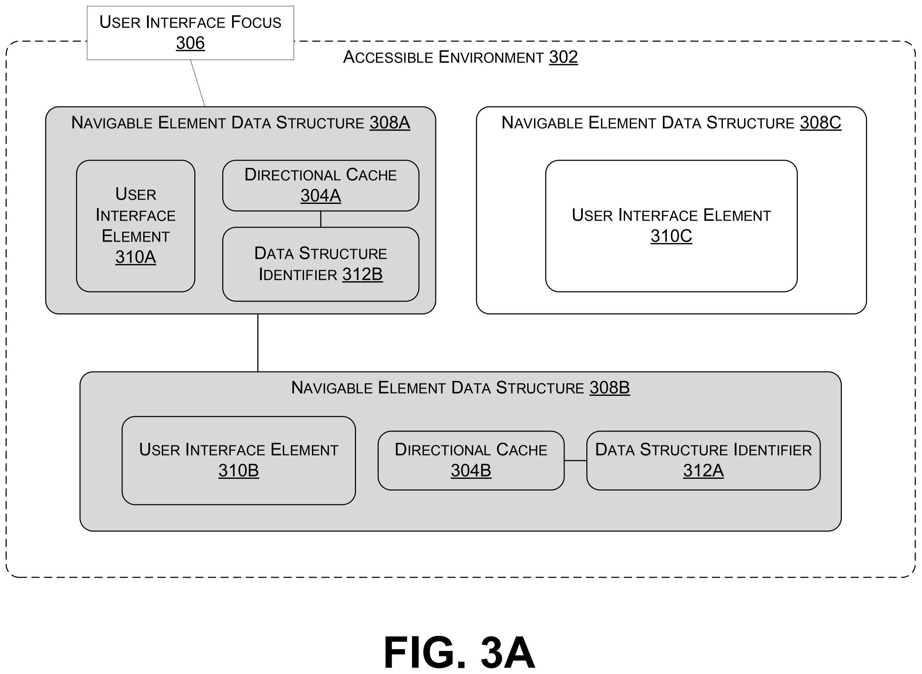

Turning now to FIG. 3A, a specific scenario within an accessible environment 302 illustrates the use of directional caches 304A and 304B for enabling predictable and intuitive movement reversals. As indicated by the shading in FIG. 3A, a user interface focus 306 is initially set at the navigable element data structure 308A representing a user interface element 310A. Subsequently, a user provides a directional command defining a downward movement via a non-spatial input device (e.g., a keyboard, a gamepad). Accordingly, the user interface focus 306 transitions from the navigable element data structure 308A to the navigable element data structure 308B. As described above, the navigable element data structure 308B is selected as the subsequent navigable element data structure due to its position as the nearest navigable element data structure in the cardinal direction defined by the directional command as determined from equivalent referent edges and the sorted list of user interface element positions.

In addition to transitioning the user interface focus 306 from the navigable element data structure 308A to the navigable element structure 308B, the directional cache 304B of the navigable element data structure 308B is configured with a data structure identifier 312A associated with the navigable element data structure 308A. In a specific example, the directional cache 304B is an "up" directional cache similar to the directional cache 212A discussed above with respect to FIG. 2. In some examples, the data structure identifier 312A can be a pointer directed to the navigable element data structure 308A. In this way, the navigable element data structure 308B records the fact that the user navigated to the navigable element data structure 308B from above by way of the navigable element data structure 308A.

Consider then, that the user wishes to reverse their previous "down" directional command by inputting an "up" directional command. In lieu of the directional cache 304B, both the navigable element data structure 308A and the neighboring navigable element data structure 308C are valid candidates due to the position of the bounded areas for the corresponding user interface elements 310A and 310C in relation to the bounded area of the user interface element 310B. Consequently, without the directional cache, upwards movement from the navigable element data structure 308B may be unpredictable and inconsistent. In contrast, by utilizing the directional cache 304B and the data structure identifier 312A, the accessible environment 302 directs the user interface focus 306 to the navigable element data structure 308A. Accordingly, the directional cache 304A of the navigable element data structure 308A is likewise configured with a data structure identifier 312B that is associated with the navigable element data structure 308B. In a specific example, the directional cache 304A is a "down" directional cache.

In the event the directional cache 304B does not contain an entry (e.g., a data structure identifier 312A), the accessible environment 302 can fall back on the movement rules described above when multiple, equally valid navigable element data structures 308A and 308C are available. As mentioned, the movement rules of the accessible environment 302 can mimic the concept of lines in the context of printed text in which the navigable element data structure 308A and the navigable element data structure 308C are placed along a horizontal line. Accordingly, the accessible environment 302 directs the user interface focus 306 to the "beginning" of the figurative line.

However, the location of the "beginning" may differ depending on language reading order. For instance, in the context of computer displays, text can be displayed from left to right (e.g., English) or right to left (e.g., Arabic). As such, the accessible environment 302 can define a default position (e.g., the beginning of a line) based on the user-configured system language. If the system language is a left-to-right (LTR) language, the accessible environment 302 directs the user interface focus 306 to the navigable element data structure 308A. Conversely, if the system language is a right-to-left (RTL) language, the accessible environment 302 directs the user interface focus 306 to the navigable element data structure 308C.

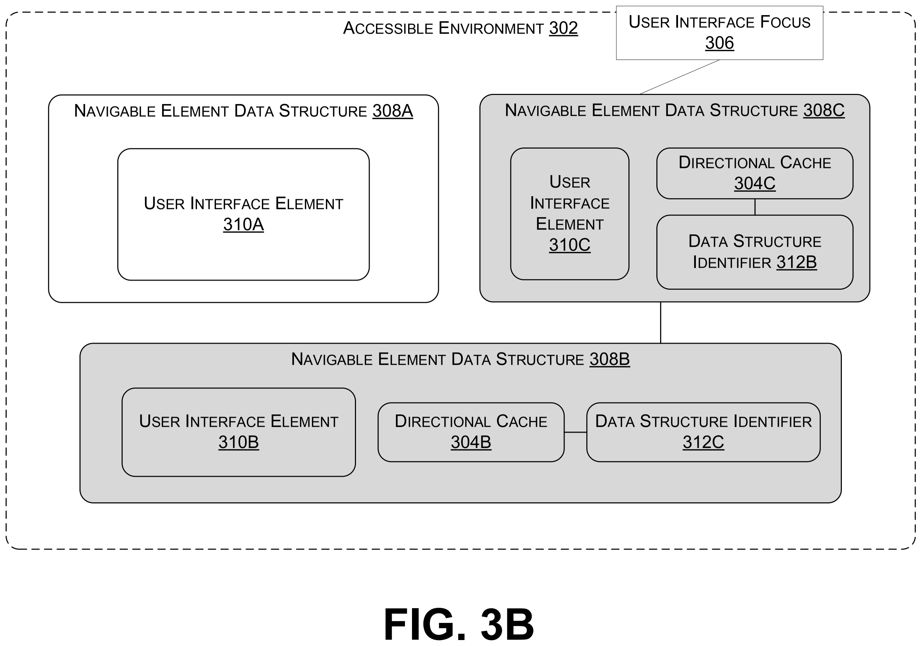

However, in the event the directional cache 304B of the navigable element data structure 308B does not align with the default line beginning defined based on the system language, the directional cache 304B supersedes default settings. As illustrated in FIG. 3B, an alternative example is shown in which the user interface focus 306 begins at the navigable element data structure 308C representing a user interface element 310C. Similar to the above example, a user can input a "down" directional command causing the user interface focus 306 to transition from the navigable element data structure 308C to the navigable element data structure 308B. In response, the directional cache 304B is configured with a data structure identifier 312C associated with the navigable element data structure 308C.

As in the above example, the directional cache 304B indicates that the user navigated to the navigable element data structure 308B from above by way of the navigable element data structure 308C. In various examples, the directional cache 304B is overwritten by new directional commands. For instance, consider a user that navigates to the navigable element data structure 308B from the navigable element data structure 308A. The directional cache 304B is accordingly configured with the data structure identifier 312A associated with the navigable element data structure 308A. At a later point, the user then navigates to the navigable element data structure 308B from the navigable element data structure 308C. Consequently, the directional cache 304B that was previously configured with the data structure identifier 312A is overwritten with the data structure identifier 312C. Furthermore, as the user reverses course from the navigable element data structure 308B to the navigable element data structure 308C, the directional cache 304C is accordingly configured with the data structure identifier 312B. In this way, the accessible environment 302 maintains predictable and consistent navigation despite potential ambiguity.

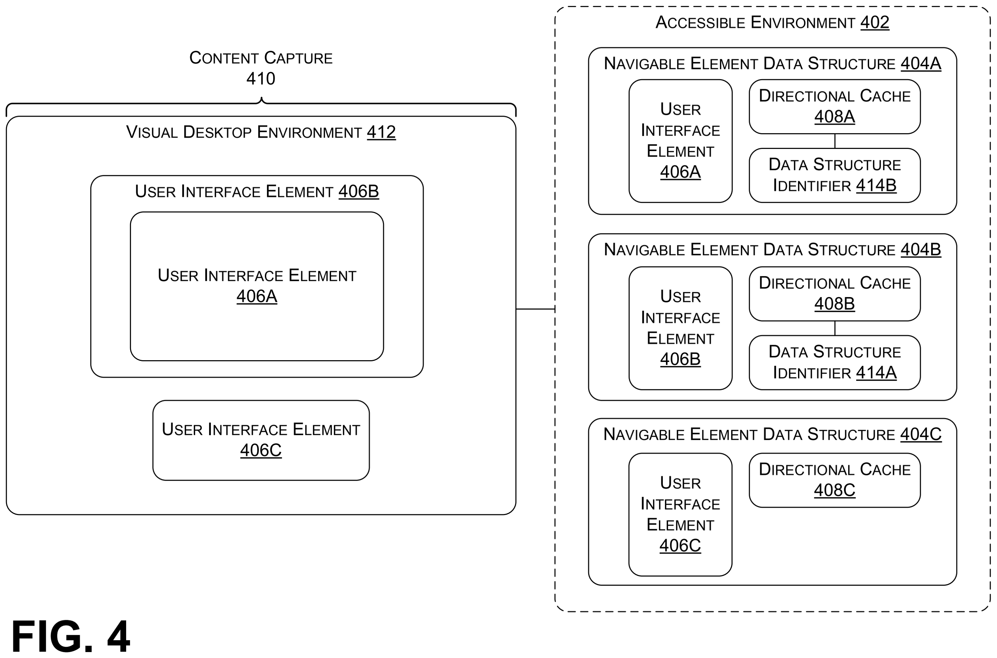

Turning now to FIG. 4, another example situation in which an accessible environment 402, in accordance with the techniques presented herein, addresses potentially ambiguous and/or confusing navigation is shown and described. As in the examples discussed above, each navigable element data structure 404A-404C represents a corresponding user interface element 406A-406C including the bounded area and visual content associated with each. Each navigable element data structure 404A-404C also includes a directional cache 408A-408C that can indicate a subsequent navigable element data structure in each cardinal direction (e.g., up, down, left, and right).

In the current example, the translation system processes a content capture 410 depicting a visual desktop environment 412 containing the user interface elements 406A-406C represented by the navigable element data structures 404A-404C. As shown in FIG. 4, the user interface element 406A substantially overlaps with the user interface element 406B. In a conventional accessibility system, one or both of the user interface elements 406A and 406B may be unreachable due to inconsistent and/or unpredictable movement calculations. In contrast, the accessible environment 402 can pre-fill certain entries in the directional caches 408A and 408B for overlapping user interface elements 406A and 406B.

In one example, for a user interface element 406A that is fully encircled by another user interface element 406B, the accessible environment 402 can pre-fill the directional cache 408A for every cardinal direction with a data structure identifier 414B associated with the navigable element data structure 404B. In this way, the directional cache 408A captures the fact that travelling out from the user interface element 406A in any direction leads to the user interface element 406B. Stated another way, pre-filling every cardinal direction of the directional cache 408A indicates to the user that they must travel through the user interface element 406B to reach other user interface elements 406C.

In another example, the accessible environment 402 can selectively pre-fill certain portions of a directional cache 408B. While the user interface element 406A is placed such that it cannot access another user interface element 406C without passing through the user interface element 406B, the same placement renders the user interface element 406B as the only one that can directly access the user interface element 406A. As such, one or more cardinal directions of the directional cache 408B are configured with a data structure identifier 414A associated with the navigable element data structure 404A. In a specific example, the "left" entry of the directional cache 408B may be configured with the data structure identifier 414A such that a leftward directional input causes the accessible environment to "step into" the user interface element 406B. In various examples, a partial directional cache pre-fill can be executed with consideration for the position of nearby user interface elements 406C, as well as cache usage. For instance, an unused entry in the directional cache 408B with no user interface element in the associated direction represents an ideal candidate for a pre-fill of the overlapped user interface element 406A. In this way, the directional caches 408A and 408B enable users to predictably and intuitively navigate to every user interface element 406A-406C.

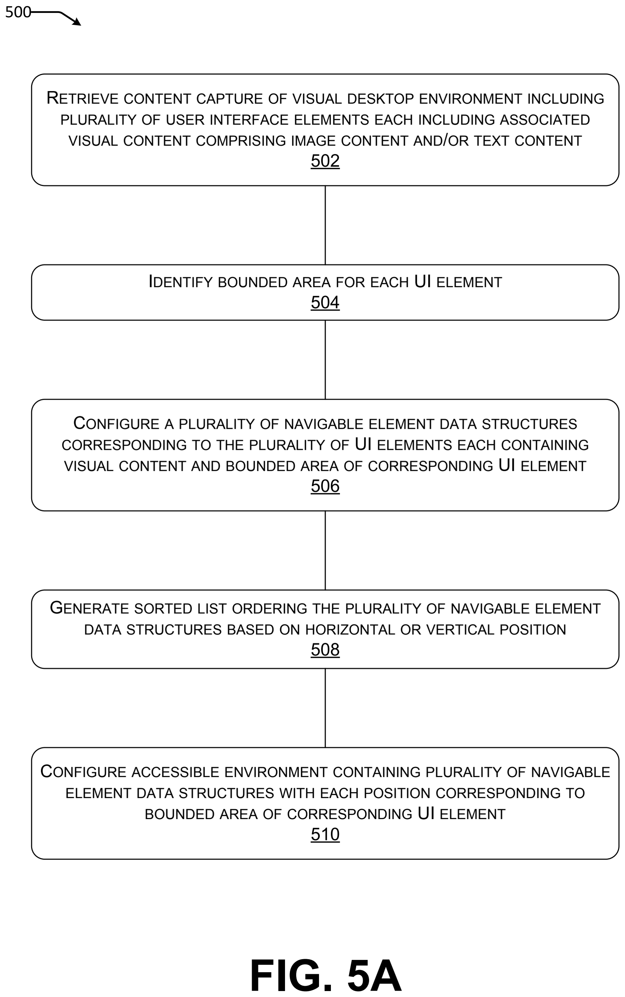

Turning now to FIG. 5A, aspects of a process 500 for translating a content capture depicting user interface elements in a visual desktop environment into an accessible environment for interactivity with non-spatial input devices are shown and described. With respect to FIG. 5A, the process 500 begins at operation 502 where the translation system retrieves a content capture of a visual desktop environment including a plurality of user interface elements. An individual user interface element includes an associated visual content comprising at least one of an image content and a text content. As mentioned above, text content includes any kind of text data including strings of plain text as well as formattable text objects such as lists, menus, tables, and the like.

Next, at operation 504, the translation system identifies a bounded area for each user interface element as well as the included visual content therein using a first computational model. In a specific example, the first computational model is a screen region detection model that can calculate the likelihood that a given region of the content capture contains pertinent information (e.g., an information density). Moreover, the screen region detection model can perform semantic analysis to optionally group two or more pieces of visual content together under a single user interface element (e.g., an image and caption). In this way, the screen region detection model can extract image content from the content capture. In still another example, the translation system extracts the text content of the content capture using a second computation model. In a specific example, the second computation model is an optical character recognition model.

Then, at operation 506, the translation system configures a plurality of navigable element data structures corresponding to the plurality of user interface elements. Each individual navigable element data structure contains the visual content and the bounded area of the corresponding user interface element. As mentioned above, the translation system can load the user interface element components into the navigable element data structures as shared pointers that enable the translation system to directly set the user interface focus.

Subsequently, at operation 508, the translation system generates a sorted list ordering the plurality of navigable element data structures based on a horizontal position and on a vertical position of each of the corresponding plurality of user interface elements. In various examples, the sorted list can comprise a first sorted list that orders the navigable element data structures in ascending horizontal position and a second sorted list that orders the navigable element data structures in ascending vertical position from a predefined X/Y coordinate starting point (0,0) (e.g., the upper left corner of the visual desktop environment).

Next, at operation 510, the translation system configures an accessible environment containing the plurality of navigable element data structures, wherein a position of each of the navigable element data structures corresponds to the bounded area of each corresponding user interface element. As described above, the horizontal position and vertical position of a given user interface element is defined by its bounded area. In a specific example, a bounded area is defined as a 300x600 pixel rectangle with an upper left corner originating at position (535, 700) within the visual desktop environment. Consequently, the upper right corner is located at (835, 700), the lower left corner is located at (535, 1300), and the lower right corner is located at (835, 1300).

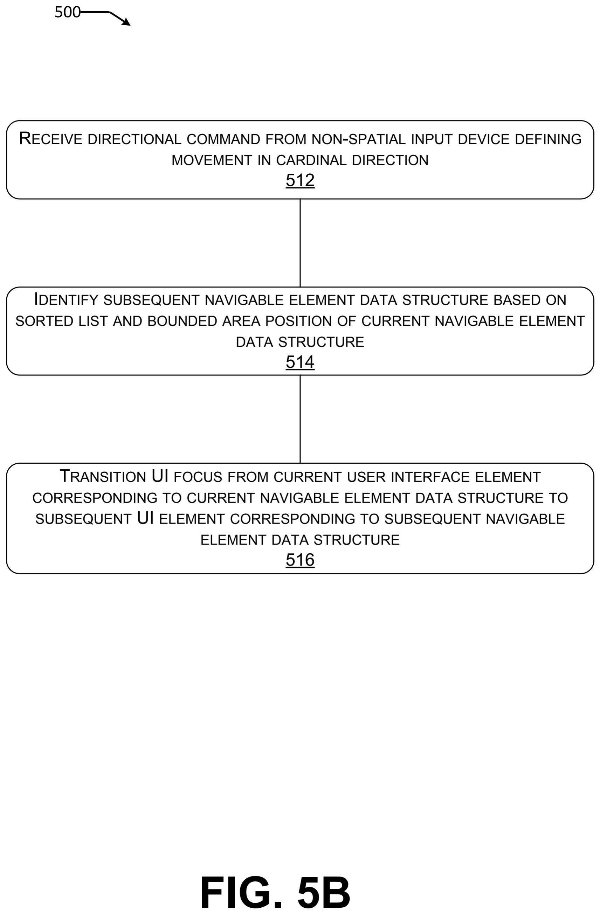

Proceeding to FIG. 5B, the process 500 continues at operation 512 in which the translation system receives a directional command from a non-spatial input device defining a movement in a cardinal direction (e.g., up, down, left, right). In various examples, the non-spatial input device is a directional pad on a game controller (e.g., a gamepad), the arrow keys on a keyboard, or the like. Non-spatial input devices differ from spatial input devices such as a mouse, a trackpad, a thumb stick, which involve moving the spatial input device and/or a component of the spatial input device through physical space. As such, users with disabilities such as those with visual impairments, limited dexterity, and the like, may be unable to use spatial input devices and thus rely on non-spatial input devices as well as other assistive technologies (e.g., screen readers, haptic feedback devices) to interact with personal computing devices.

Then, at operation 514, the translation system identifies a subsequent navigable element data structure based on the sorted list(s) and in relation to a bounded area position of a current navigable element data structure. In various examples, the translation system refers to the horizontal sorted list or the vertical sorted list depending on the cardinal direction defined by the directional command to determine the nearest navigable element data structure to the user's current position. As described above, this can be accomplished by selecting equivalent referent edges corresponding to the direction of travel and the user-configured system language.

Finally, at operation 516, the translation system transitions a user interface focus from a current user interface element corresponding to the current navigable element data structure to a subsequent user interface element corresponding to the subsequent navigable element data structure. As mentioned above, transitioning the user interface focus further includes recording the movement in a directional cache of the subsequent navigable element data structure that enables the user to predictably and intuitively reverse directional commands.

The particular implementation of the technologies disclosed herein is a matter of choice dependent on the performance and other requirements of a computing device. Accordingly, the logical operations described herein are referred to variously as states, operations, structural devices, acts, or modules. These states, operations, structural devices, acts, and modules can be implemented in hardware, software, firmware, in special-purpose digital logic, and any combination thereof. It should be appreciated that more or fewer operations can be performed than shown in the figures and described herein. These operations can also be performed in a different order than those described herein.

It also should be understood that the illustrated method can begin and/or end at any time and need not be performed in its entirety. Some or all operations of the method, and/or substantially equivalent operations, can be performed by execution of computer-readable instructions included on a computer-storage media, as defined below. The term "computer-readable instructions," and variants thereof, as used in the description and claims, is used expansively herein to include routines, applications, application modules, program modules, programs, components, data structures, algorithms, and the like. Computer-readable instructions can be implemented on various system configurations, including single-processor or multiprocessor systems, minicomputers, mainframe computers, personal computers, hand-held computing devices, microprocessor-based, programmable consumer electronics, combinations thereof, and the like.

Thus, it should be appreciated that the logical operations described herein are implemented (1) as a sequence of computer implemented acts or program modules running on a computing system and/or (2) as interconnected machine logic circuits or circuit modules within the computing system. The implementation is a matter of choice dependent on the performance and other requirements of the computing system. Accordingly, the logical operations described herein are referred to variously as states, operations, structural devices, acts, or modules. These operations, structural devices, acts, and modules may be implemented in software, in firmware, in special purpose digital logic, and any combination thereof.

For example, the operations of the process 500 can be implemented, at least in part, by modules running the features disclosed herein can be a dynamically linked library, a statically linked library, functionality produced by an application programing interface, a compiled program, an interpreted program, a script, or any other executable set of instructions. Data can be stored in a data structure in one or more memory components. Data can be retrieved from the data structure by addressing links or references to the data structure.

Although the illustration may refer to the components of the figures, it should be appreciated that the operations of the process 500 may also be implemented in other ways. In addition, one or more of the operations of the process 500 may alternatively or additionally be implemented, at least in part, by a chipset working alone or in conjunction with other software modules. In the example described below, one or more modules of a computing system can receive and/or process the data disclosed herein. Any service, circuit, or application suitable for providing the techniques disclosed herein can be used in operations described herein.

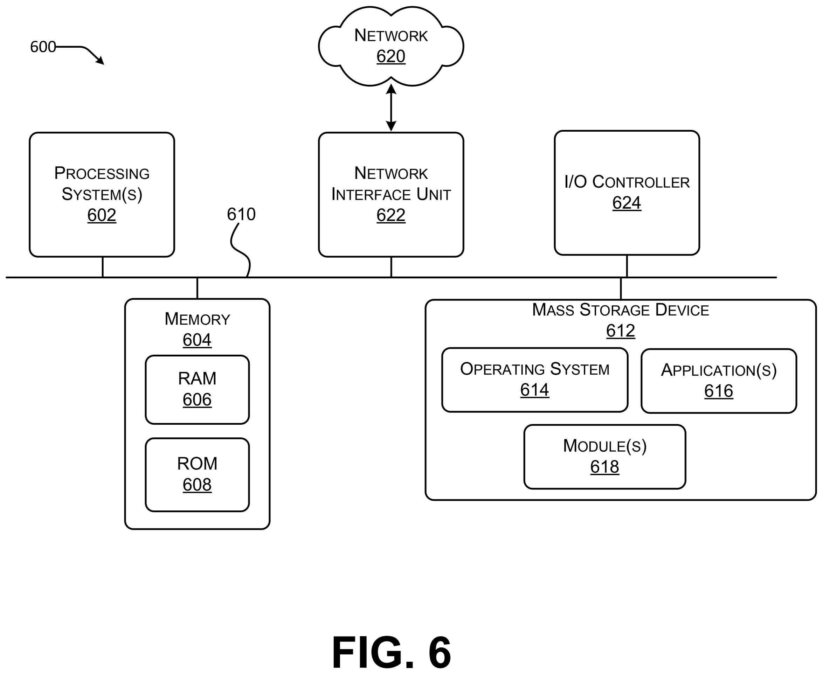

FIG. 6 shows additional details of an example computer architecture 600 for a device, capable of executing computer instructions (e.g., a module or a program component described herein). The computer architecture 600 illustrated in FIG. 6 includes processing system 602, a system memory 604, including a random-access memory 606 (RAM) and a read-only memory (ROM) 608, and a system bus 610 that couples the memory 604 to the processing system 602. The processing system 602 comprises processing unit(s).

Processing unit(s), such as processing unit(s) of processing system 602, can represent, for example, a CPU-type processing unit, a GPU-type processing unit, a field-programmable gate array, another class of digital signal processor (DSP), or other hardware logic components that may, in some instances, be driven by a CPU. For example, illustrative types of hardware logic components that can be used include Application-Specific Integrated Circuits, Application-Specific Standard Products, System-on-a-Chip Systems, Complex Programmable Logic Devices, and the like.

A basic input/output system containing the basic routines that help to transfer information between elements within the computer architecture 600, such as during startup, is stored in the ROM 608. The computer architecture 600 further includes a mass storage device 612 for storing an operating system 614, application(s) 616, modules 618, and other data described herein.

The mass storage device 612 is connected to processing system 602 through a mass storage controller connected to the bus 610. The mass storage device 612 and its associated computer-readable media provide non-volatile storage for the computer architecture 600. Although the description of computer-readable media contained herein refers to a mass storage device, the computer-readable media can be any available computer-readable storage media or communication media that can be accessed by the computer architecture 600.

Computer-readable media includes computer-readable storage media and/or communication media. Computer-readable storage media includes one or more of volatile memory, nonvolatile memory, and/or other persistent and/or auxiliary computer storage media, removable and non-removable computer storage media implemented in any method or technology for storage of information such as computer-readable instructions, data structures, program modules, or other data. Thus, computer storage media includes tangible and/or physical forms of media included in a device and/or hardware component that is part of a device or external to a device, including RAM, static RAM (SRAM), dynamic RAM (DRAM), phase change memory (PCM), ROM, erasable programmable ROM (EPROM), electrically EPROM (EEPROM), flash memory, compact disc read-only memory (CD-ROM), digital versatile disks (DVDs), optical cards or other optical storage media, magnetic cassettes, magnetic tape, magnetic disk storage, magnetic cards or other magnetic storage devices or media, solid-state memory devices, storage arrays, network attached storage, storage area networks, hosted computer storage or any other storage memory, storage device, and/or storage medium that can be used to store and maintain information for access by a computing device.

In contrast to computer-readable storage media, communication media can embody computer-readable instructions, data structures, program modules, or other data in a modulated data signal, such as a carrier wave, or other transmission mechanism. As defined herein, computer storage media does not include communication media. That is, computer-readable storage media does not include communications media consisting solely of a modulated data signal, a carrier wave, or a propagated signal, per se.

According to various configurations, the computer architecture 600 may operate in a networked environment using logical connections to remote computers through the network 620. The computer architecture 600 may connect to the network 620 through a network interface unit 622 connected to the bus 610. The computer architecture 600 also may include an input/output controller 624 for receiving and processing input from a number of other devices, including a keyboard, mouse, touch, or electronic stylus or pen. Similarly, the input/output controller 624 may provide output to a display screen, a printer, or other type of output device.

The software components described herein may, when loaded into the processing system 602 and executed, transform the processing system 602 and the overall computer architecture 600 from a general-purpose computing system into a special-purpose computing system customized to facilitate the functionality presented herein. The processing system 602 may be constructed from any number of transistors or other discrete circuit elements, which may individually or collectively assume any number of states. More specifically, the processing system 602 may operate as a finite-state machine, in response to executable instructions contained within the software modules disclosed herein. These computer-executable instructions may transform the processing system 602 by specifying how the processing system 602 transition between states, thereby transforming the transistors or other discrete hardware elements constituting the processing system 602.

The disclosure presented herein also encompasses the subject matter set forth in the following clauses.

Example Clause A, a method for translating a content capture of a visual desktop environment into an accessible environment enabling directional navigation comprising: retrieving a content capture of the visual desktop environment including a plurality of user interface elements, wherein an individual user interface element includes an associated visual content comprising one of an image content and a text content; identifying, for each individual user interface element of the plurality of user interface elements, a bounded area within the content capture containing the visual content; configuring a plurality of navigable element data structures corresponding to the plurality of user interface elements, wherein an individual navigable element data structure contains: the visual content comprising at least one of an image content or a text content of the corresponding user interface element; and the bounded area of the corresponding user interface element; generating a sorted list ordering the plurality of navigable element data structures based on a horizontal position or a vertical position of each of the corresponding plurality of user interface elements; configuring the accessible environment containing the plurality of navigable element data structures based on the sorted list; receiving a directional command from a non-spatial user input device, the directional command defining a movement in a cardinal direction; identifying a subsequent navigable element data structure based on the sorted list and in relation to a bounded area position of a current navigable element data structure; and transitioning a user interface focus from a current user interface element corresponding to the current navigable element data structure to a subsequent user interface element corresponding to the subsequent navigable element data structure.

Example Clause B, the method of Example Clause A, wherein the individual navigable element data structure further includes a directional cache, the method further comprising recording the current user interface element in the directional cache of the navigable element data structure corresponding to the subsequent user interface element in response to receiving the directional command.

Example Clause C, the method of Example Clause B, further comprising: receiving a reverse directional command from the user input device; and transitioning the user interface focus from the subsequent navigable element data structure to the current user interface element in accordance with the directional cache of the navigable subsequent element data structure corresponding to the subsequent user interface element.

Example Clause D, the method of Example Clause B, wherein: the sorted list comprises an entry in the directional cache for each of the plurality of navigable element data structures; and the entry records a subsequent navigable element data structure for each cardinal direction.

Example Clause E, the method of any one of Example Clause A through D, wherein the bounded area and visual content for each individual user interface element is identified by a first computational model, the method further comprising: extracting, by a second computational model, the visual content of at least two user interface elements; and grouping the visual content of the at least two user interface elements based on a semantic relationship identified by the first computational model.

Example Clause F, the method of any one of Example Clause A through E, further comprising: determining that a first bounded area of a first user interface element overlaps with a second bounded area of a second user interface element; in response to the determining: pre-filling a first directional cache of a first navigable element data structure with the second user interface element; and pre-filling a second directional cache of a second navigable element data structure with the first user interface element.

Example Clause G, the method of any one of Example Clause A through F, wherein: the directional command defines a movement in a horizontal direction; and the subsequent navigable element data structure is selected in accordance with a horizontal movement rule such that the bounded area of the subsequent navigable element data structure and the bounded area of the current user interface element are required to share at least one vertical coordinate within the content capture.

Example Clause H, the method of any one of Example Clause A through G, wherein: the directional command defines a movement in a vertical direction; and the subsequent navigable element data structure is selected in accordance with a vertical movement rule such that the bounded area of the subsequent navigable element data structure and the bounded area of the current user interface element do not share at least one vertical coordinate within the content capture.

Example Clause I, the method of any one of Example Clause A through H, wherein identifying the subsequent navigable element data structure comprises selecting an equivalent referent edge of the current user interface element and a plurality of plausible subsequent navigable element data structures based on the cardinal direction defined by the directional command and a user-configured system language.

Example Clause J, the method of any one of Example Clause A through I, wherein the sorted list comprises: a horizontal sorted list organizing the plurality of navigable data structures according to an ascending horizontal position; and a vertical sorted list organizing the plurality of navigable data structures according to an ascending vertical position.

Example Clause K, the method of any one of Example Clause A through J, further comprising communicating the plurality of navigable element data structures to a user via a user-configured accessibility output.

Example Clause L, a system for translating a content capture of a visual desktop environment into an accessible environment enabling directional navigation comprising: a processing system; and a computer-readable medium having computer-readable instructions encoded thereon that, when executed by the processing system, cause the system to perform operations comprising: retrieving a content capture of the visual desktop environment including a plurality of user interface elements, wherein an individual user interface element includes an associated visual content comprising at least one of an image content or a text content; identifying, for each individual user interface element of the plurality of user interface elements, a bounded area within the content capture containing the visual content; configuring a plurality of navigable element data structures corresponding to the plurality of user interface elements, wherein an individual navigable element data structure contains: the visual content comprising at least one of an image content and a text content of the corresponding user interface element; and the bounded area of the corresponding user interface element; generating a sorted list ordering the plurality of navigable element data structures based on a horizontal position or a vertical position of each of the corresponding plurality of user interface elements; configuring the accessible environment containing the plurality of navigable element data structures based on the sorted list; receiving a directional command from a non-spatial user input device, the directional command defining a movement in a cardinal direction; identifying a subsequent navigable element data structure based on the sorted list and in relation to a bounded area position of a current navigable element data structure; and transitioning a user interface focus from a current user interface element corresponding to the current navigable element data structure to a subsequent user interface element corresponding to the subsequent navigable element data structure.

Example Clause M, the system of Example Clause L, wherein the individual navigable element data structure further includes a directional cache, the operations further comprising recording the current user interface element in the directional cache of the navigable element data structure corresponding to the subsequent user interface element in response to receiving the directional command.

Example Clause N, the system of Example Clause M, wherein the operations further comprise: receiving a reverse directional command from the user input device; and transitioning the user interface focus from the subsequent navigable element data structure to the current user interface element in accordance with the directional cache of the navigable subsequent element data structure corresponding to the subsequent user interface element.

Example Clause O, the system of Example Clause N, wherein: the sorted list comprises an entry in the directional cache for each of the plurality of navigable element data structures; and the entry records a subsequent navigable element data structure for each cardinal direction.

Example Clause P, the system of any one of Example Clause L through O, wherein the bounded area and visual content for each individual user interface element is identified by a first computational model, the operations further comprising: extracting, by a second computational model, the visual content of at least two user interface elements; and grouping the visual content of the at least two user interface elements based on a semantic relationship identified by the first computational model.

Example Clause Q, the system of any one of Example Clause L through P, the operations further comprising: determining that a first bounded area of a first user interface element overlaps with a second bounded area of a second user interface element; in response to the determining: pre-filling a first directional cache of a first navigable element data structure with the second user interface element; and pre-filling a second directional cache of a second navigable element data structure with the first user interface element.

Example Clause R, the system of any one of Example Clause L through Q, wherein: the directional command defines a movement in a horizontal direction; and the subsequent navigable element data structure is selected in accordance with a horizontal movement rule such that the bounded area of the subsequent navigable element data structure and the bounded area of the current user interface element are required to share at least one vertical coordinate within the content capture.

Example Clause S, a computer-readable storage medium for directional navigation of a content capture of a visual desktop environment within an accessible environment, the computer-readable storage medium having encoded thereon computer-readable instructions that when executed by a processing system cause a system to perform operations comprising: receiving a directional command from a non-spatial user input device, the directional command defining a movement in a cardinal direction from a position of a current navigable element data structure; identifying a subsequent navigable element data structure based on a sorted list and in relation to the position of the current navigable element data structure; and transitioning a user interface focus from a current user interface element corresponding to the current navigable element data structure to a subsequent user interface element corresponding to the subsequent navigable element data structure.

Example Clause T, the computer-readable storage medium of Example Clause S, wherein each of the current and subsequent navigable element data structures further includes a directional cache, the operations further comprising recording the current user interface element in the directional cache of the subsequent navigable element data structure in response to receiving the directional command.

The techniques presented herein provide a translation system for constructing an accessible environment from a content capture depicting a plurality of user interface elements in a visual desktop environment. As such, the accessible environment enables users who rely on assistive technologies to navigate and interact with personal computing devices. In various examples, assistive technology includes non-spatial input devices (e.g., keyboards, gamepads) that enable users with disabilities to interact with personal computing devices. Generally described, the present system analyzes the content capture using computational models to identify the user interface elements and extract the visual content associated with each user interface element. The visual content is then loaded into a corresponding plurality of data structures that form the accessible environment. As such, a user can provide directional commands to navigate through the accessible environments in a predictable and intuitive manner.

Conditional language such as, among others, "can," "could," "might" or "may," unless specifically stated otherwise, are understood within the context to present that certain examples include, while other examples do not include, certain features, elements, and/or steps. Thus, such conditional language is not generally intended to imply that certain features, elements and/or steps are in any way required for one or more examples or that one or more examples necessarily include logic for deciding, with or without user input or prompting, whether certain features, elements and/or steps are included or are to be performed in any particular example. Conjunctive language such as the phrase "at least one of X, Y or Z," unless specifically stated otherwise, is to be understood to present that an item, term, etc. may be either X, Y, or Z, or a combination thereof.

The terms "a," "an," "the" and similar referents used in the context of describing the invention (especially in the context of the following claims) are to be construed to cover both the singular and the plural unless otherwise indicated herein or clearly contradicted by context. The terms "based on," "based upon," and similar referents are to be construed as meaning "based at least in part" which includes being "based in part" and "based in whole" unless otherwise indicated or clearly contradicted by context.

In addition, any reference to "first," "second," etc. elements within the Summary and/or Detailed Description is not intended to and should not be construed to necessarily correspond to any reference of "first," "second," etc. elements of the claims. Rather, any use of "first" and "second" within the Summary, Detailed Description, and/or claims may be used to distinguish between two different instances of the same element.

In closing, although the various configurations have been described in language specific to structural features and/or methodological acts, it is to be understood that the subject matter defined in the appended representations is not necessarily limited to the specific features or acts described. Rather, the specific features and acts are disclosed as example forms of implementing the claimed subject matter.

## Claims

1. A method for translating a content capture (102) of a visual desktop environment (104) into an accessible environment (108) enabling directional navigation comprising:
retrieving a content capture (102) of the visual desktop environment (104) including a plurality of user interface elements (106A-106D), wherein an individual user interface element (106C) includes an associated visual content (118) comprising one of an image content and a text content (116);
identifying, for each individual user interface element of the plurality of user interface elements (106A-106D), a bounded area (112) within the content capture (102) containing the visual content (118);
configuring a plurality of navigable element data structures (120A-120D) corresponding to the plurality of user interface elements (106A-106D), wherein an individual navigable element data structure (120A) contains:
the visual content (118) comprising at least one of an image content or a text content (116) of the corresponding user interface element (106A); and
the bounded area (112) of the corresponding user interface element (106A);
generating a sorted list (122A & 122B) ordering the plurality of navigable element data structures (120) based on a horizontal position (122A) or a vertical position (122B) of each of the corresponding plurality of user interface elements (106A-106D);
configuring the accessible environment (108) containing the plurality of navigable element data structures (120A-120D) based on the sorted list;
receiving a directional command (124) from a non-spatial user input device (126), the directional command (124) defining a movement in a cardinal direction;
identifying a subsequent navigable element data structure (120A-120D) based on the sorted list (122A & 122B) and in relation to a bounded area (112) position of a current navigable element data structure (120A-120D); and
transitioning a user interface focus from a current user interface element (106A-106D) corresponding to the current navigable element data structure (120A-120D) to a subsequent user interface element (106A-106D) corresponding to the subsequent navigable element data structure (120A-120D).

2. The method of claim 1, wherein the individual navigable element data structure further includes a directional cache, the method further comprising:
recording the current user interface element in the directional cache of the navigable element data structure corresponding to the subsequent user interface element in response to receiving the directional command.

3. The method of claim 2, further comprising:
receiving a reverse directional command from the user input device; and
transitioning the user interface focus from the subsequent navigable element data structure to the current user interface element in accordance with the directional cache of the navigable subsequent element data structure corresponding to the subsequent user interface element.

4. The method of claim 2, wherein:
the sorted list comprises an entry in the directional cache for each of the plurality of navigable element data structures; and
the entry records a subsequent navigable element data structure for each cardinal direction.

5. The method of any one of claim 1 through claim 4, wherein the bounded area and visual content for each individual user interface element is identified by a first computational model, the method further comprising:
extracting, by a second computational model, the visual content of at least two user interface elements; and
grouping the visual content of the at least two user interface elements based on a semantic relationship identified by the first computational model.

6. The method of any one of claim 1 through claim 5, further comprising:
determining that a first bounded area of a first user interface element overlaps with a second bounded area of a second user interface element;
in response to the determining:
pre-filling a first directional cache of a first navigable element data structure with the second user interface element; and
pre-filling a second directional cache of a second navigable element data structure with the first user interface element.

7. The method of any one of claim 1 through claim 6, wherein at least one of:
the directional command defines a movement in a horizontal direction, and the subsequent navigable element data structure is selected in accordance with a horizontal movement rule such that the bounded area of the subsequent navigable element data structure and the bounded area of the current user interface element are required to share at least one vertical coordinate within the content capture; and
the directional command defines a movement in a vertical direction, and the subsequent navigable element data structure is selected in accordance with a vertical movement rule such that the bounded area of the subsequent navigable element data structure and the bounded area of the current user interface element do not share at least one vertical coordinate within the content capture.

8. The method of any one of claim 1 through claim 7, wherein identifying the subsequent navigable element data structure comprises selecting an equivalent referent edge of the current user interface element and a plurality of plausible subsequent navigable element data structures based on the cardinal direction defined by the directional command and a user-configured system language.

9. The method of any one of claim 1 through claim 8, wherein the sorted list comprises:
a horizontal sorted list organizing the plurality of navigable data structures according to an ascending horizontal position; and
a vertical sorted list organizing the plurality of navigable data structures according to an ascending vertical position.

10. The method of any one of claim 1 through claim 9, further comprising communicating the plurality of navigable element data structures to a user via a user-configured accessibility output.

11. A system for translating a content capture (102) of a visual desktop environment (104) into an accessible environment (108) enabling directional navigation comprising:
a processing system; and
a computer-readable medium having computer-readable instructions encoded thereon that, when executed by the processing system, cause the system to perform operations comprising:
retrieving a content capture (102) of the visual desktop environment (104) including a plurality of user interface elements (106A-106D), wherein an individual user interface element (106C) includes an associated visual content (118) comprising at least one of an image content or a text content (116);
identifying, for each individual user interface element of the plurality of user interface elements (106A-106D), a bounded area (112) within the content capture (102) containing the visual content (118);
configuring a plurality of navigable element data structures (120A-120D) corresponding to the plurality of user interface elements (106A-106D), wherein an individual navigable element data structure (120A) contains:
the visual content (118) comprising at least one of an image content and a text content (116) of the corresponding user interface element (106A); and
the bounded area (112) of the corresponding user interface element (106A);
generating a sorted list (122A & 122B) ordering the plurality of navigable element data structures (120) based on a horizontal position (122A) or a vertical position (122B) of each of the corresponding plurality of user interface elements (106A-106D);
configuring the accessible environment (108) containing the plurality of navigable element data structures (120A-120D) based on the sorted list;
receiving a directional command (124) from a non-spatial user input device (126), the directional command (124) defining a movement in a cardinal direction;
identifying a subsequent navigable element data structure (120A-120D) based on the sorted list (122A & 122B) and in relation to a bounded area (112) position of a current navigable element data structure (120A-120D); and
transitioning a user interface focus from a current user interface element (106A-106D) corresponding to the current navigable element data structure (120A-120D) to a subsequent user interface element (106A-106D) corresponding to the subsequent navigable element data structure (120A-120D).

12. The system of claim 11, wherein the individual navigable element data structure further includes a directional cache, the operations further comprising recording the current user interface element in the directional cache of the navigable element data structure corresponding to the subsequent user interface element in response to receiving the directional command.

13. The system of claim 12, wherein the operations further comprise:
receiving a reverse directional command from the user input device; and
transitioning the user interface focus from the subsequent navigable element data structure to the current user interface element in accordance with the directional cache of the navigable subsequent element data structure corresponding to the subsequent user interface element.

14. The system of claim 12, wherein:
the sorted list comprises an entry in the directional cache for each of the plurality of navigable element data structures; and
the entry records a subsequent navigable element data structure for each cardinal direction.

15. A computer-readable storage medium for directional navigation of a content capture (102) of a visual desktop environment (104) within an accessible environment (108), the computer-readable storage medium having encoded thereon computer-readable instructions that when executed by a processing system cause a system to perform operations comprising:
receiving a directional command (124) from a non-spatial user input device (126), the directional command (124) defining a movement in a cardinal direction from a position of a current navigable element data structure;
identifying a subsequent navigable element data structure (120B-120D) based on a sorted list (122A & 122B) and in relation to the position of the current navigable element data structure (120A-120D); and
transitioning a user interface focus from a current user interface element (106A-106D) corresponding to the current navigable element data structure (120A-120D) to a subsequent user interface element (106A-106D) corresponding to the subsequent navigable element data structure (120A-120D).
